Europäisches Patentamt

European Patent Office

Office européen des brevets

(19)

(11) Publication number: **0 070 650**
**B1**

# EUROPEAN PATENT SPECIFICATION

(45) Date of publication of patent specification: **18.09.85**

(21) Application number: **82303581.1**

(22) Date of filing: **08.07.82**

(51) Int. Cl.⁴: **B 22 C 3/00,** B 22 D 41/02,
F 27 D 1/00, C 04 B 32/02

(54) Thermally insulative refractory compositions suitable for use for the containment of molten material.

(30) Priority: **16.07.81 US 283860**
**16.03.82 US 357024**

(43) Date of publication of application:
**26.01.83 Bulletin 83/04**

(45) Publication of the grant of the patent:
**18.09.85 Bulletin 85/38**

(84) Designated Contracting States:
**BE DE FR GB IT SE**

(56) References cited:
**EP-A-0 009 940**
**EP-A-0 042 767**
**DE-A-2 559 151**
**DE-A-2 745 271**
**DE-A-3 010 868**
**DE-B-2 853 397**

(73) Proprietor: **THE BABCOCK & WILCOX COMPANY**
**1010 Common Street P.O. Box 60035**
**New Orleans Louisiana 70160 (US)**

(72) Inventor: **Widener, Joseph**
**526 Laverne Avenue**
**Belvedere South Carolina 29841 (US)**
Inventor: **Laprade, Steve A.**
**1827 Robinson Road**
**North Augusta South Carolina 29841 (US)**
Inventor: **Britt, James M.**
**235 Cavalier Drive**
**Martinez Georgia 30907 (US)**

(74) Representative: **Cotter, Ivan John et al**
**D. YOUNG & CO. 10 Staple Inn**
**London WC1V 7RD (GB)**

Courier Press, Leamington Spa, England.

# Description

The present invention relates to thermally insulative refractory compositions suitable for use for the containment of molten material.

In the foundry industry, moulds and stools are used for production of metal ingots wherein molten metal is poured into a mould essentially comprising a base and side walls, the makeup of which provides resistance to molten metal attack. The mould contains the molten material and, after casting and solidifying in the mould, the cast metal is removed from the mould and cleaned to form a desired finished product.

Heretofore, sand and, more recently, rigid, compressed, fibrous, silica-alumina boards have been used to form the base and side walls of metal moulds and stools. Such a rigid board, while sufficient for use as the base of a mould stool, has severe shortcomings when it is used as a mould or stool side wall, particularly when a rounded edge or rounded corner is encountered or desired. The use of a rigid board to round an edge or corner would require scoring of the board at several places along the board at the location of a curve to be followed to give the board the needed flexibility for shaping to follow the desired path. The use of a rigid board to follow or form a curve thus requires additional labour to score the board, thus increasing labour and overall installation costs. Additionally, scoring results in undesirable ingot surface imperfections which require additional labour for removal. However, the most severe problem associated with board scoring is the creation of seams along the curve. The seams so created form weak points along the wall that often allow undesirable metal penetration leading to metal loss, metal contamination, irregular product shape, shortening mould use life, and a potential hazard to health.

Embodiments of the present invention described hereinbelow provide a flexible thermally insulative refractory composition that can be used for the containment of molten material, for example molten metal in the foundry industry, that can be used to replace the sand and the known rigid, compressed, fibrous, silica-alumina boards mentioned above, and that can overcome or at least alleviate many of the shortcomings of the known rigid board. Refractory compositions embodying the present invention are flexible, desirably so much so as to have a bend radius of at least 76 mm (3 inches), and thereby eliminate the need for scoring to round an edge or follow a curve. Use of flexible compositions embodying the invention can thus provide for fewer mould seams, reduce labour costs, afford greater ease in installation, and virtually eliminate metal penetration along curved surfaces.

The present invention provides a flexible thermally insulative refractory composition suitable for use for the containment of molten material. One such composition includes approximately, in percentage by dry weight, 70 to 90% of an inorganic fibre and from 10 to 30% of a material selected from the group consisting of asphalt, carbon black, graphite, silicon carbide, and furan resin. Another such composition includes approximately, in percentage by dry weight, 70 to 85% of an inorganic fibre, 10 to 25% of a material selected from the group consisting of asphalt, carbon black, graphite, silicon carbide, and furan resin, and 2 to 10% of a phenolic resin. The latter composition could include 2 to 12% of a latex or, in combination, 0.02 to 4% of an anionic polymer and 0.5 to 4% of a cationic polymer; additionally, it could include both the latex and the polymers in the percentages specified. The expression "latex", as used herein, means an aqueous dispersion of a natural or synthetic rubber. In addition, a suitable flexible thermally insulative refractory composition in accordance with the invention can comprise, in approximate dry weight percentages, 70 to 85% of an inorganic fibre, 2 to 10% of a phenolic resin, 5 to 15% of a latex, 0.5 to 5% of an anionic polymer and 0.5 to 3.5% of a cationic polymer. The inorganic fibre component of the compositions may essentially be alumina-silica, mineral wool, glass or asbestos.

Various features of novelty which characterise the invention are pointed out with particularity in the claims following this description. For a better understanding of the invention, various embodiments thereof will be described in detail by way of illustrative and non-limiting example.

A predominant component of flexible thermally insulative refractory compositions embodying the present invention, suitable for use for the containment of molten material, is an inorganic fibre and, more particularly, a fibre that is essentially alumina-silica, mineral wool, glass or asbestos. A second main ingredient is a carbonaceous component selected from the group consisting of asphalt, carbon black, graphite, silicon carbide and furan resin. The composition can also include phenolic resin, latex, and anionic and cationic polymers and combinations thereof. However, when a phenolic resin, latex and anionic and cationic polymers are used with the inorganic fibre it has been found that a suitable refractory composition can be obtained without the addition of a carbonaceous component selected from the above-mentioned group.

The inorganic fibre component of the composition can range, in approximate percentage by dry weight, from 70 to 90% with the carbonaceous component ranging, in approximate percentage by dry weight, from 10 to 30%, the carbonaceous component being selected from the group consisting of asphalt, carbon black, graphite, silicon carbide and furan resin. The fibre component, namely, alumina-silica, mineral wool, glass, or asbestos, and the carbonaceous component, are commercially readily available. The desired product can be achieved by limiting the components to inorganic fibre and a carbonaceous material selected from the above-mentioned group.

A typical composition would comprise, in approximate percentage by dry weight, 70 to 85% of an inorganic fibre, 10 to 25% of a material selected from the group consisting of asphalt, carbon black, graphite, silicon carbide, and furan resin, and 2 to 10% of a phenolic resin. The composition could further include, in approximate percentage by dry weight, 2 to 12% of latex component or 0.02 to 4% of an anionic polymer and 0.5 to 4% of a cationic polymer. Additionally, a suitable composition could include, in combination with 70 to 85% of the inorganic fibre, 2 to 10% of phenolic resin, 5 to 15% of latex, 0.5 to 5% of an anionic polymer and 0.5 to 3.5% of a cationic polymer. The latex and polymers, both anionic and cationic, are also readily available commercially.

A preferred composition would include, in approximate percentage by dry weight, 70 to 80% of an inorganic fibre, 10 to 15% of a material selected from the group consisting of asphalt, carbon black graphite, silicon carbide, and furan resin, 4 to 6% of a phenolic resin, 5 to 10% of a latex, 0.5 to 4% of an anionic polymer and 0.5 to 2.5% of a cationic polymer.

The composition can be made by mixing the selected components in water to form a slurry, followed by dewatering, shaping, drying and curing. Typically, and by way of example, the slurry can be obtained by mixing in water the selected fibre component, a carbonaceous component selected from the above-mentioned group, phenolic resin, latex, and anionic and cationic polymers. The slurry mixing step is followed by the making of a fibre mat achieved by removing water from the slurry while forming the fibre mat into a desired shaped composition. The mat forming step is followed by a drying and curing step wherein substantially all of the remaining moisture is removed from the composition to attain the desired flexible thermally insulative refractory product. Curing typically is accomplished at a temperature in the range of from approximately 121°C (250°F) to about 204°C (400°F). The finished product is flexible when curing is accomplished in the 121 to 204°C (250 to 400°F) range with the flexibility of the composition being somewhat less when curing is accomplished above 149°C (300°F).

A composition can be made of 70 to 90% inorganic fibres and 10 to 30% of a carbonaceous material component selected from the above-mentioned group. A composition of this type can successfully be used to contain molten metal, specifically, poured molten metal. The fibre content provides strength, flexibility and combined metal temperature and metal penetration resistance, whereas the carbonaceous component keeps the molten metal from adhering to, reacting with or penetrating the composition. Phenolic resin can be added to the composition, lowering the percentages of the fibre and the carbonaceous material component selected from the above-mentioned group, to strengthen the composition to allow for molten metal impingement on the composition surface. The polymers can be added to the composition to disperse then flocculate the solids to the fibre to obtain a homogeneous dispersion of solids onto the fibre. Latex can be added as a component to provide for more flexibility and can impart enough flexibility to the composition so that the composition might be used for a circular or cylindrical molten metal containing shape.

Compositions embodying the invention find particular application in the foundry industry wherein a flexible thermally insulative refractory composition is desired for use for the containment of molten metal with temperatures of up to approximately 1427°C (2600°F). The composition finds application for use as mould walls, mould stool bases, lining for ladles riser sleeves, and additionally may be used in situations where an asbestos replacement is contemplated. The composition achieves its objective, that is, resisting molten metal attack or penetration. When the molten metal contacts the composition, carbonisation occurs and a barrier is established at the composition-metal interface that prevents the molten metal from further wetting the composition and thereby effectively contains the molten material.

Several tests were conducted utilising compositions composed of compounds in the ranges specified. The following non-limiting examples are given in order to illustrate the invention. The composition compounds are all in approximate percentage by dry weight.

### Example 1

The composition comprised 83.1% alumina-silica fibre, 13.5% asphalt, 3% phenolic resin, 0.4% cationic polymer and 0.05% anionic polymer. The composition lined the inside surface of a steel sleeve and aluminium nails were used to fix the composition to the sleeve. The composition was also used as the base of the sleeve to simulate a mould stool. Molten iron alloy at a temperature in the range of 1260 to 1316°C (2300 to 2400°F) was poured into the sleeve, cooled and the resulting ingot was removed. The mould stool effectively contained the molten metal and the ingot was stripped without an appreciable amount of fibre adhering to the ingot.

### Example 2

The composition comprised 83.1% alumina-silica fibre, 13.5% asphalt, 3% phenolic resin, 0.4% cationic polymer and 0.03% anionic polymer. The testing was conducted essentially as specified in Example 1. The mould stool contained the metal and the ingot was stripped clean, that is, no fibre adhered to the ingot.

### Example 3

The composition comprised 78.4% alumina-silica fibre, 21.1% asphalt, 0.5% cationic polymer and 0.02% anionic polymer. The testing was essentially conducted as specified in Example 1, but adhesive tape was used instead of aluminium nails. The mould stool contained the metal and the ingot was stripped with only minor fibre sticking.

### Example 4

The composition comprised 72.9% alumina-silica, 11.8% asphalt, 4.6% phenolic resin, 2.2% cationic polymer, 3.7 anionic polymer, and 4.8% latex. The testing was conducted essentially as specified in Example 1. The mould stool contained the metal and the ingot was stripped with only slight fibre sticking.

### Example 5

The composition comprised 73.8% alumina-silica fibre, 11.9% asphalt, 2.3% phenolic resin, 2% cationic polymer, 3.8% anionic polymer, and 6.2% latex. The testing proceeded as in Example 1, the mould stool contained the metal and the ingot was stripped with slight fibre sticking.

### Example 6

The composition comprised 79.2% alumina-silica fibre, 4.4% phenolic resin, 9.8% latex, 4.4% anionic polymer and 2.2% cationic polymer. The composition lined the inside surface of a steel sleeve and adhesive tape was used to fix the composition to the sleeve. The composition was also used at the base of the sleeve to simulate a mould stool. Molten iron alloy at a temperature in the range of 1260 to 1316°C (2300 to 2400°F) was poured into the sleeve, cooled and the resulting ingot was removed. The mould stool effectively contained the molten metal and the ingot was stripped clean, that is, no fibre adhered to the ingot. ·

## Claims

1. A flexible thermally insulative refractory composition suitable for use for the containment of molten material, the composition being characterised in that it comprises, in approximate percentage by dry weight, 70 to 90% of an inorganic fibre and 10 to 30% of a material selected from the group consisting of asphalt, carbon black, graphite, silicon carbide, and furan resin.

2. A composition according to claim 1, comprising, in approximate percentage by dry weight, 70 to 85% of the inorganic fibre, 10 to 25% of the material selected from the group consisting of asphalt, carbon black, graphite, silicon carbide, and furan resin, and 2 to 10% of a phenolic resin.

3. A composition according to claim 2, including 2 to 12% of a latex.

4. A composition according to claim 2 or claim 3, including 0.02 to 4% of an anionic polymer and 0.5 to 4% of a cationic polymer.

5. A composition according to claim 1, comprising, in approximate percentage by dry weight, 70 to 80% of the inorganic fibre, 10 to 15% of the material selected from the group consisting of asphalt, carbon black, graphite, silicon carbide, and furan resin, 4 to 6% of a phenolic resin, 5 to 10% of a latex, 0.5 to 4% of an anionic polymer and 0.5 to 2.5% of a cationic polymer.

6. A flexible thermally insulative refractory composition suitable for use for the containment of molten material, the composition being characterised in that it comprises, in approximate percentage by dry weight, 70 to 85% of an inorganic fibre, 2 to 10% of a phenolic resin, 5 to 15% of a latex, 0.5 to 5% of an anionic polymer and 0.5 to 3.5% of a cationic polymer.

7. A composition according to any one of claims 1 to 6, wherein the inorganic fibre is essentially alumina-silica fibre.

8. A composition according to any one of claims 1 to 6, wherein the inorganic fibre is mineral wool.

9. A composition according to any one of claims 1 to 6, wherein the inorganic fibre is glass.

10. A composition according to any one of claims 1 to 6, wherein the inorganic fibre is asbestos.

## Revendications

1. Une composition réfractaire souple thermiquement isolante utilisable pour contenir une matière en fusion, la composition étant caractérisée en ce qu'elle comprend, en pourcentages approchés en poids sec, 70 à 90% d'une fibre minérale et 10 à 30% d'une matière choisie dans le groupe constitué par l'asphalte, le noir de carbone, le graphite, le carbure de silicium et une résine de furanne.

2. Une composition selon la revendication 1 comprenant en pourcentages approchés en poids sec 70 à 85% de fibres minérales, 10 à 25% de la matière choisie dans le groupe constitué par l'asphalte, le noir de carbone, le graphite, le carbure de silicum et une résine de furanne et 2 à 10% d'une résine phénolique.

3. Une composition selon la revendication 2 contenant 2 à 12% d'un latex.

4. Une composition selon la revendication 2 ou la revendication 3 contenant 0,02 à 4% d'un polymère anionique et 0,5 à 4% d'un polymère cationique.

5. Une composition selon la revendication 1 comprenant en pourcentages approchés en poids sec, 70 à 80% de fibres minérales, 10 à 15% de la matière choisie dans le groupe constitué par l'asphalte, le noir de carbone, le graphite, le carbure de silicium et une résine de furanne, 4 à 6% d'une résine phénolique, 5 à 10% d'un latex, 0,5 à 4% d'un polymère anionique et 0,5% à 2,5% d'un polymère cationique.

6. Un composition réfractaire souple thermiquement isolante utilisable pour contenir une matière en fusion, la composition étant caractérisée en ce qu'elle comprend en pourcentages approchés en poids sec, 70 à 85% d'une fibre minérale, 2 à 10% d'une résine phénolique, 5 à 15% d'un latex, 0,5 à 5% d'un polymère anionique et 0,5 à 3,5% d'un polymère cationique.

7. Une composition selon l'une quelconque des revendications 1 à 6, dans laquelle la fibre minérale est essentiellement de la fibre d'alumine-silice.

8. Une composition selon l'une quelconque des revendications 1 à 6, dans laquelle la fibre minérale est une laine minérale.

9. Une composition selon l'une quelconque des revendications 1 à 6, dans laquelle la fibre minérale est du verre.

10. Une composition selon l'une quelconque des revendications 1 à 6, dans laquelle la fibre minérale est de l'amiante.

**Patentansprüche**

1. Flexible wärmeisolierende feuerfeste Zusammensetzung, die für die Verwendung für die Aufnahme eines geschmolzenen Materials geeignet ist, dadurch gekennzeichnet, daß die Zusammensetzung als ungefährer Prozentsatz des Trockengewichtes 70 bis 90% einer anorganischen Faser und 10 bis 30% eines Materials aus der Gruppe Asphalt, Ruß, Graphit, Siliciumcarbid und Furanharz umfaßt.

2. Zusammensetzung nach Anspruch 1, die als ungefähren Prozentsatz des Trockengewichtes 70 bis 85% der anorganischen Faser, 10 bis 25% des Materials aus der Gruppe Asphalt, Ruß, Graphit, Silicumcarbid und Furanharz sowie 2 bis 10 4 eines Phenolharzes umfaßt.

3. Zusammensetzung nach Anspruch 2 mit 2 bis 12% eines Latex.

4. Zusammensetzung nach Anspruch 2 oder Anspruch 3 mit 0,02 bis 4% eines anionischen Polymers und 0,5 bis 4% eines kationischen Polymers.

5. Zusammensetzung nach Anspruch 1, die als ungefähren Prozentsatz des Trockengewichtes 70 bis 80% der anorganischen Faser, 10 bis 15% des Materials aus der Gruppe Asphalt, Ruß, Graphit, Siliciumcarbid und Furanharz, 4 bis 6% eines Phenolharzes, 5 bis 10% eines Latex, 0,5 bis 4% eines anionischen Polymers und 0,5 bis 2,5% eines kationischen Polymers umfaßt.

6. Flexible wärmeisolierende feuerfeste Zusammensetzung, die für die Verwendung für die Aufnahme von geschmolzenem Material geeignet ist, dadurch gekennzeichnet, daß die Zusammensetzung als ungefähren Prozentsatz des Trockengewichtes 70 bis 85% einer anorganischen Faser, 2 bis 10% eines Phenolharzes, 5 bis 15% eines Latex, 0,5 bis 5% eines anionischen Polymers und 0,5 bis 3,5 4 eines kationischen Polymers umfaßt.

7. Zusammensetzung nach einem der Ansprüche 1 bis 6, worin die anorganische Faser im wesentlichen Tonerde-Kieselsäure-Faser ist.

8. Zusammensetzung nach einem der Ansprüche 1 bis 6, worin die anorganische Faser Mineralwolle ist.

9. Zusammensetzung nach einem der Ansprüche 1 bis 6, worin die anorganische Faser Glas ist.

10. Zusammensetzung nach einem der Ansprüche 1 bis 6, worin die anorganische Faser Asbest ist.